# EUROPÄISCHE PATENTANMELDUNG

(11) **EP 1 247 662 A2**
(43) Veröffentlichungstag der Anmeldung: **09.10.2002**
(21) Anmeldenummer: 02006335.0
(22) Anmeldetag: 21.03.2002
(51) Int. Cl.: B60C 27/14

(54) **Vorrichtung zur Aufnahme einer Schneekette**

(30) Priorität: 03.04.2001 DE 10116482
(71) Anmelder: Pfundmair, Peter, 86316 Friedberg-Hügelshart (DE)
(72) Erfinder: Pfundmair, Peter, 86316 Friedberg-Hügelshart (DE)
(74) Vertreter: Munk, Ludwig, Dipl.-Ing.

(57) **Zusammenfassung**

Es wird eine Vorrichtung zur Erleichterung der Handhabung einer einer Radanordnung (2) eines Fahrzeugs (1) zugeordneten Schneekette (4) in Vorschlag gebracht. Diese Vorrichtung enthält eine im Bereich der zugeordneten Radanordnung (2) mit zu deren Achse etwa paralleler Achse am Fahrzeugrahmen (7) anbringbare, drehbar gelagerte Wickelwelle (5) auf die die Schneekette (4) aufwickelbar bzw. von der die Schneekette (4) abwickelbar ist.

## Beschreibung

Die Erfindung betrifft eine Vorrichtung zur Aufnahme einer einer Radanordnung eines Fahrzeugs, insbesondere einer Zwillingsradanordnung eines Lastkraftwagens, zugeordneten Schneekette.

Beim Auflegen bzw. Abnehmen einer Schneekette muss diese bisher mangels geeigneter Hilfsvorrichtungen manuell angehoben und auf die zugeordnete Randanordnung aufgezogen bzw. von dieser abgenommen werden. Dies erweist sich insbesondere bei Schneeketten für größere Radanordnungen, wie Zwillingsradanordnungen von Lastkraftwagen, als sehr anstrengend und aufwendig, da derartige Schneeketten ein vergleichsweise großes Gewicht aufweisen. Hinzu kommt, dass bei vielen Einsatzfällen, wie z.B. bei Holzfahrzeugen etc., die abwechselnd auf befestigtem und unbefestigtem Untergrund fahren, in Folge eines häufigen Wechsels des Untergrunds auch eine häufige Montage und Demontage der Schneeketten erforderlich ist, wobei der hiermit verbundene zeitliche Aufwand auch die Wirtschaftlichkeit stark beeinflusst.

Hiervon ausgehend ist es daher die Aufgabe der vorliegenden Erfindung, die Handhabung von Schneeketten, insbesondere von größeren Radanordnungen zugeordneten Schneeketten, zu erleichtern.

Diese Aufgabe wird durch die Merkmale des Anspruchs 1 gelöst.
Hiernach kommt eine Vorrichtung zur Aufnahme einer einer Radanordnung eines Fahrzeugs, insbesondere einer Zwillingsradanordnung eines Lastkraftwagens, zugeordneten Schneekette in Vorschlag, wobei eine im Bereich der zugeordneten Radanordnung mit zu deren Achse paralleler Achse am Fahrzeugrahmen anbringbare, drehbar gelagerte Wickelwelle vorgesehen ist, auf welche die Schneekette aufwickelbar bzw. von welcher die Schneekette abwickelbar ist.

Mit diesen Maßnahmen werden die eingangs geschilderten Nachteile vollständig vermieden. Im unbenutzten Zustand ist die Schneekette auf die Wickelwelle aufgewickelt. Zum Montieren der Schneekette kann diese einfach von der Wickelwelle abgewickelt werden. Dabei wird die Schneekette in vorteilhafter Weise bereits so dargeboten, dass sie mit vergleichsweise geringem Kraftaufwand mit einem Ende zum Eingriff mit der zugeordneten Radanordnung gebracht werden kann. Die weitere Abwicklung kann dann durch entsprechendes Bewegen der Radanordnung erfolgen. Beim Demontieren der Schneekette wird diese mit einem Ende zum Eingriff mit der der Radanordnung benachbarten Wickelwelle gebracht und dann entsprechend der durch Bewegen der Radanordnung erfolgenden Freigabe auf die Wickelwelle aufgewickelt, was ebenfalls mit vergleichsweise geringem Kraftaufwand bewerkstelligt werden kann. Durch die erfindungsgemäßen Maßnahmen werden daher nicht nur eine hohe Bedienungsfreundlichkeit und ein hoher Arbeitskomfort gewährleistet, sondern auch kurze Montage- bzw. Demontagezeiten erreicht, was vielfach erwünscht ist und zu einer hohen Sicherheit und Wirtschaftschaftlichkeit führt.

Vorteilhafte Ausgestaltungen und zweckmäßige Fortbildungen der übergeordneten Maßnahmen sind in den Unteransprüchen angegeben. So kann die Wickelwelle zweckmäßig neben der zugeordneten Radanordnung im Bereich des Niveaus deren oberen Scheitelpunkts vorgesehen sein. Diese Maßnahmen ergeben eine besonders günstige Plazierung der Wickelwelle und der hierauf in Form einer Wicklung aufnehmbaren Schneekette.

Eine weitere zweckmäßige Maßnahme kann darin bestehen, dass die Wickelwelle einen zumindest über die Breite der zugeordneten Radanordnung sich erstreckenden, der Schneekette zugeordneten Aufnahmebereich aufweist. Dies ermöglicht in vorteilhafter Weise die Aufnahme der Schneekette in einer über der Breite der zu zugeordneten Radanordnung ausgebreiteten Form, was nicht nur einen vergleichsweise geringen Wicklungsdurchmesser ergibt, sondern auch die Montage der Schneekette besonders erleichtert.

In weiterer Fortbildungen dieser Maßnahmen kann die Wickelwelle im der Schneekette zugeordneten Aufnahmebereich mit wenigstens zwei einander gegenüberliegenden, dachförmig nach außen abfallenden Leisten versehen sein. Diese Maßnahme begünstigt in vorteilhafter Weise die seitliche Ausbreitung der Schneekette.

Vorteilhaft kann die Wickelwelle im der Schneekette zugeordneten Aufnahmebereich auch mit Mitnehmerelementen versehen sein, mit denen die Schneekette mit einem ihrer Endbereiche zum Eingriff bringbar ist. Dies erleichtert die Aufwicklung der Schneekette.

Eine weitere zweckmäßige Maßnahme kann darin bestehen, dass die Wickelwelle mittels einer zum Eingriff mit ihrem äußeren Ende bringbaren, abnehmbaren Kurbel antreibbar ist. Die Verwendung einer Kurbel ergibt eine besonders einfache und robuste Lösung des Antriebsproblems. Infolge der Abnehmbarkeit der Kurbel ist sichergestellt, dass bei Fahrbetrieb keine störenden Teile nach außen vorstehen.

Zur Vermeidung einer unbeabsichtigten Abwicklung der auf die Wickelwelle aufgewickelten Schneekette kann die Wickelwelle einfach mittels eines lösbaren Verbindungselements mit dem Fahrzeugrahmen verbunden und so in Drehrichtung blockiert werden.

Eine weitere, besonders zu bevorzugende Maßnahme kann darin bestehen, dass der Wickelwelle ein die auf dieser als Wicklung aufgenommene Schneekette abdeckender, abnehmbarer Sack zugeordnet ist. Auf diese Weise lässt sich eine Verschmutzung und/oder Vereisung der auf die Wickelwelle aufgewickelten Schneekette auf einfache Weise verhindern.

Vorteilhaft kann die Wickelwelle im Bereich ihres fahrzeugseitigen Endes auf einem zugeordneten Lagergehäuse drehbar gelagert sein, das lösbar am Fahrzeugrahmen festlegbar ist. Hierdurch ist sichergestellt, dass die erfindungsgemäße Vorrichtung auf einfache Weise als Baueinheit montierbar bzw. demontierbar ist. Es ist daher in vorteilhafter Weise möglich, die erfindungsgemäße Vorrichtung nur in den Wintermonaten am Fahrzeug anzubringen und in den Sommermonaten abzunehmen.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine in Achsrichtung gesehene Teilansicht eines Lastkraftwagens mit einer erfindungsgemäßen Vorrichtung zur Aufnahme einer einer Zwillingsradanordnung zugeordneten, hier teilweise abgewickelten Schneekette,
- Figur 2: eine Draufsicht auf die Anordnung Figur 1 mit von der zugeordneten Vorrichtung abgewickelter Schneekette und
- Figur 3: eine in Fahrzeuglängsrichtung gesehene Ansicht der Anordnung gemäß Figur 1 mit auf der zugeordneten Vorrichtung aufgenommener, durch eine Umhüllung geschützter Schneekette und
- Figur 4: eine der die Schneekette aufnehmenden Wickelwelle zugeordnete Bremseinrichtung.

Hauptanwendungsgebiet der vorliegenden Erfindung sind Fahrzeuge mit vergleichsweise schweren Schneeketten, die häufig gewechselt werden müssen, wie das zum Beispiel bei mit Zwillingsrädern versehenen Lastkraftwagen, insbesondere Langholzfahrzeugen, Militärfahrzeugen und dergleichen, der Fall ist.

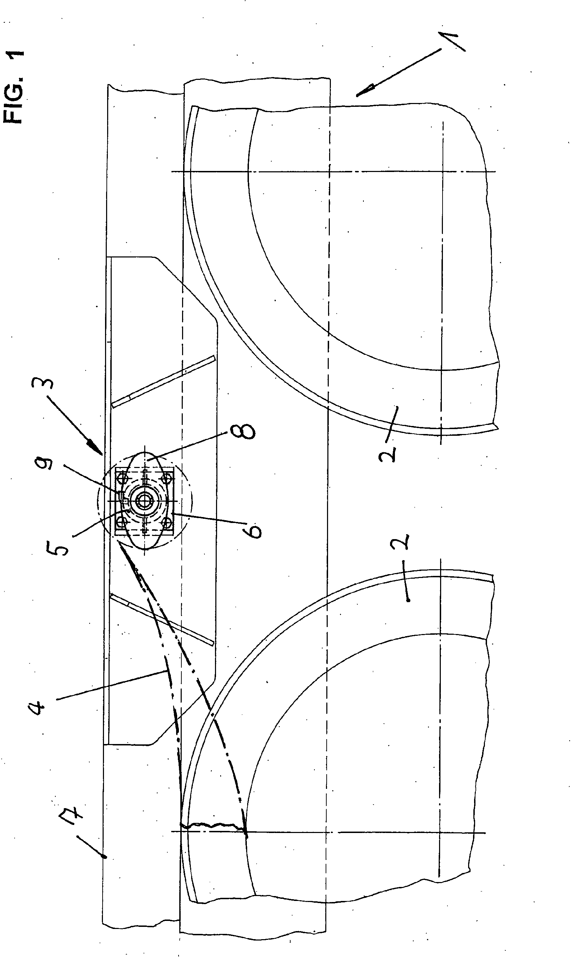

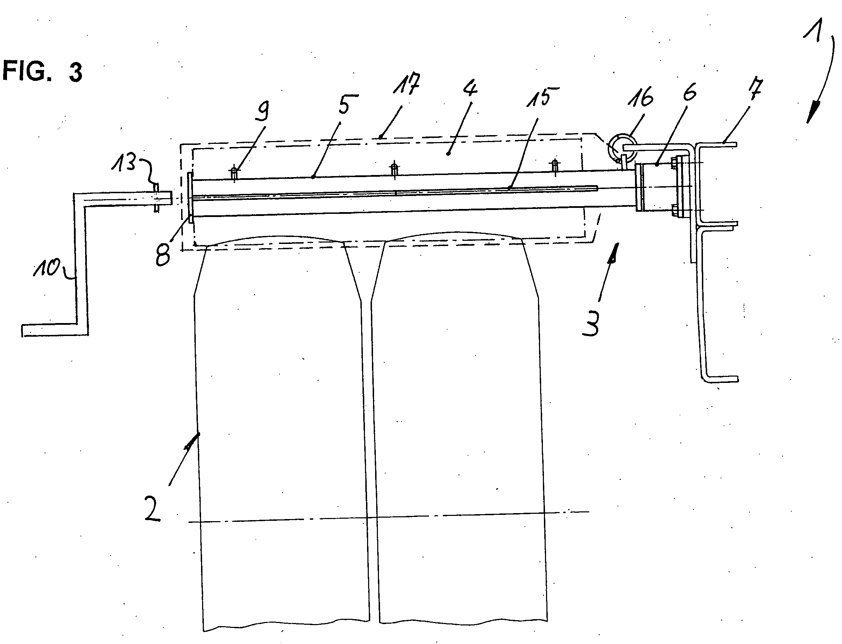

Der den Zeichnungen zugrundeliegende Lastkraftwagen 1 besitzt in an sich bekannter Weise in seinem hinteren Bereich auf beiden Fahrzeugseiten zwei hintereinander angeordnete Zwillingsradanordnungen 2, wobei hier auf jeder Fahrzeugseite jeweils einer Zwillingsradanordnung 2 eine Vorrichtung 3 zur Aufnahme einer passenden Schneekette 4 zugeordnet ist. Die Vorrichtung 3 enthält eine mit zur Radachse etwa paralleler Achse angeordnete, um ihre Achse drehbar gelagerte Wickelwelle 5, auf der die zugeordnete Schneekette 4, wie die Figuren 1 und 3 erkennen lassen, in Form einer Wicklung aufnehmbar ist.

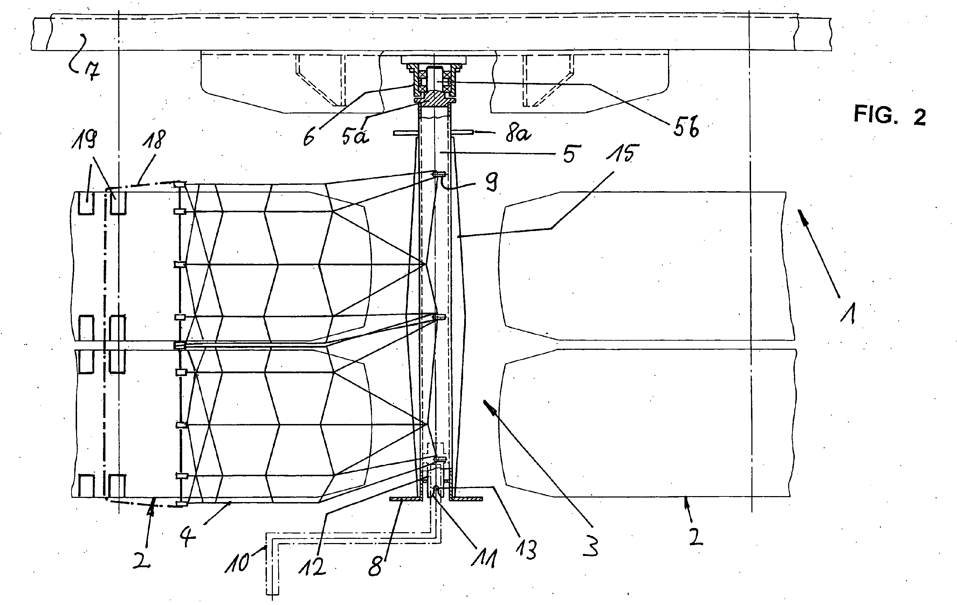

Im unbenutzten Zustand ist die Schneekette entsprechend der Darstellung in Figur 3 auf der Wickelwelle 5 aufgewickelt. Bei Bedarf wird die Schneekette 1 von der Wickelwelle 5 abgewickelt und auf die zugeordnete Radanordnung 2 aufgelegt, wie in den Figuren 1 und 2 angedeutet ist. Um dies zu erleichtern, ist die Vorrichtung 3 jeweils neben der zugeordneten Radanordnung im Bereich des Niveaus deren oberen Scheitelpunkts plaziert, wie aus den Figuren 1 bis 3 anschaulich entnehmbar ist. In diesem Bereich ist in der Regel auch ausreichend Platz vorhanden. In jedem Fall ist die Wickelwelle 5 so plaziert, dass Kollisionen der Wickelwelle 5 bzw. der hierauf aufgenommenen Wicklung mit der zugeordneten Radanordnung unterbleiben.

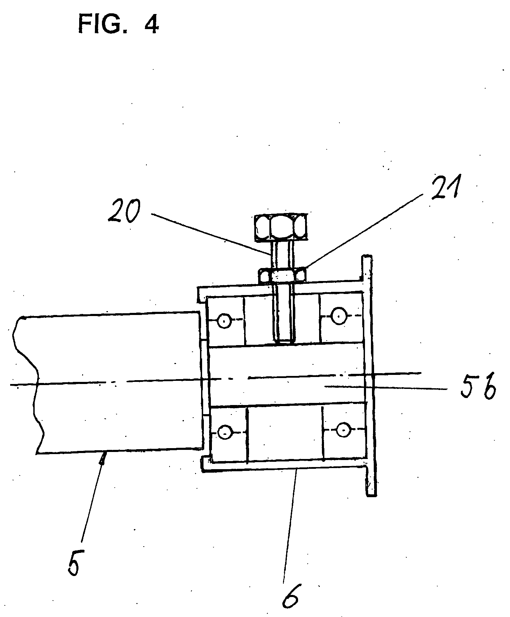

Die Wickelwelle 5 ist, wie am besten Figur 2 zeigt, ist, im Bereich ihres fahrzeugseitigen Endes auf einem zugeordneten Lagergehäuse 6 drehbar gelagert. Der Wickelwelle liegt zweckmäßig ein Rohrabschnitt zugrunde, an den ein Drehteil 5a angesetzt ist, das mit einem in das Lagergehäuse 6 eingreifenden Lagerzapfen 5b versehen ist, dem eine Bremseinrichtung der aus Figur 4 entnehmbaren Art zugeordnet sein kann. Das Lagergehäuse 6 ist seinerseits an einen jeweils zugeordneten Längsholm 7 des Fahrgestells des Lastkraftwagens 1 lösbar angeflanscht. Die Wickelwelle 5 bildet damit zusammen mit dem Lagergehäuse 6 eine funktionsfähige Baueinheit, die komplett am Fahrgestell des Lastkraftwagens 1 angebracht bzw. hiervon abgenommen werden kann. Es ist daher möglich, die Vorrichtung 3 für die Sommermonate zu entfernen und nur für die Wintermonate anzubringen.

Die vom am jeweils zugeordneten Längsholm 7 angebrachten Lagergehäuse 6 abstehende Wickelwelle 5 erstreckt sich, wie die Figuren 2 und 3 erkennen lassen, zumindest über die Breite der zugeordneten Radanordnung 2. Auf diese Weise ergibt sich auf der Wickelwelle 5 ein der Schneekette 4 zugeordneter, zumindest über die ganze Breite der zugeordneten Radanordnung 2 reichender Aufnahmebereich. Die Länge des Aufnahmebereichs entspricht zweckmäßig der Breite der Schneekette 4 im ausgebreiteten, d.h. über der Breite gestreckten Zustand. Der Aufnahmebereich ist außen durch eine am fahrgestellfernen Ende der Wickelwelle 5 angebrachte Flanschanordnung 8 begrenzt, die ein Abrutschen der aufgenommenen Schneekette 4 verhindert, wie in Figur 1 angedeutet ist. Innen kann eine ähnliche, hier durch einen Stift 8a angedeutete Begrenzung des Aufnahmebereichs vorgesehen sein.

Die gestreckte Breite der Schneekette 4 ist größer als die Breite der zugeordneten Radanordnung 2. Der der Schneekette 4 zugeordnete Aufnahmebereich der Wickelwelle 5 ist daher, wie aus Figur 2 entnehmbar ist, größer als die Breite der Randanordnung 2. Andererseits soll die Wickelwelle 5 im Fahrbetrieb nicht über die äußere Stirnseite der Randanordnung 2 vorstehen, wie in Figur 2 angedeutet ist. Im dargestellten Beispiel ist die Wickelwelle in der Länge fix ausgebildet. Dementsprechend ragt der der Schneekette zugeordnete Aufnahmebereich einseitig über die innere Stirnseite der Radanordnung 2 hinaus. Der dadurch verursachte, aus Figur 2 ersichtliche Seitenversatz der auf der Wickelwelle 5 aufnehmbaren Schneketten-Wicklung gegenüber der Radanordnung 2 ist vielfach tolerierbar.

Es wäre aber auch denkbar, die Wickelwelle mehrteilig zu gestalten und eine axiale Verstellbarkeit eines die Schneeketten-Wicklung aufnehmenden Teils gegenüber einem im Lagergehäuse 6 gelagerten Teil der Wickelwelle 5 vorzusehen. Auf diese Weise kann der Aufnahmebereich zum Auf- und Abwickeln der Schneekette 4 mit seiner Mitte auf die Mitte der Radanordnung 2 eingestellt werden. Für den der Figur 3 zugrundeliegenden Fahrzustand kann die Wickelwelle 5 wieder soweit eingefahren werden, dass über die äußere Stirnseite der Radanordnung 2 nichts vorsteht. Um ein unkontrolliertes Verschieben der Wickelwelle 5 zu verhindern ist deren die Schneekette 4 aufnehmendes Element in der Fahrstellung gegen axiales Verschieben blockiert.

Die Wickelwelle 5 ist mit über den oben erwähnten Aufnahmebereich verteilten Mitnehmerelementen 9 versehen, mit denen die Schneekette 4, wie aus Figur 2 anschaulich hervorgeht, zum Aufwickeln mit einem ihrer Enden zum Eingriff bringbar ist. Im dargestellten Beispiel sind die Mitnehmerelemente 9 einfach als Hakenelemente ausgebildet, an denen die Schneekette 4 mit einem ihrer Enden einhängbar ist.

Zum Aufwickeln der an den Mitnehmerelementen 9 angreifenden Schneekette 4 auf die Wickelwelle 5 kann diese mittels eines etwa als in sie eingesetzter Rohrmotor ausgebildeten Antriebsmotors antreibbar sein. Im dargestellten, besonders zu bevorzugenden Ausführungsbeispiel ist die Wickelwelle 5 einfach mittels einer in den Figuren 2 und 3 angedeuteten Kurbel 10 manuell betätigbar. Die Kurbel 10 ist, wie in Figur 3 angedeutet ist, von der Wickelwelle 5 abnehmbar, so dass hiervon ausgehende Störungen im Fahrbetrieb zuverlässig vermieden werden. Hierzu ist die Wickelwelle 5, wie am besten aus Figur 2 erkennbar ist, mit einer eine Kerbung 11 aufweisenden Büchse 12 versehen, in die ein zugeordneter, mit einem Querstift 13 versehener Zapfen der Kurbel 10 einführbar ist.

Die Schneekette 4 soll beim Abwickeln von der Wickelwelle 5 über die Breite der zugeordneten Radanordnung 2 ausgebreitet werden. Um dies zu unterstützen ist die Wickelwelle 5 mit wenigstens zwei diametral einander gegenüberliegenden Leisten 15 versehen, deren radial äußerer Rand in Längsrichtung der Wickelwelle dachförmig gestaltet ist, wie am besten aus Figur 2 entnehmbar ist. Auf diese Weise ergeben sich von der Mitte der Leisten 15 zur Seite abfallende, schiefe Ebenen, wodurch das Ausbreiten der Schneekette 4 über die Breite der zugeordneten Radanordnung 2 erleichtert und begünstigt wird.

Um eine ungewollte Drehbewegung der Wickelwelle 5 und damit ein ungewolltes Abwickeln der Schneekette 4 von der Wickelwelle 5 zu verhindern, ist die Wickelwelle 5 in der der Figur 3 zugrundeliegenden Position in Drehrichtung blockierbar. Hierzu kann eine der Wickelwelle 5 zugeordnete Bremseinrichtung dienen. Im dargestellten Beispiel ist die Wickelwelle 5 hierzu, wie aus Figur 3 entnehmbar ist, mittels eines lösbaren Verbindungselements 16, beispielsweise in Form eines sogenannten Karabinerhakens, mit einem benachbarten Rahmenteil des Fahrgestells des Lastkraftwagens 1 verbindbar. Selbstverständlich kann anstelle eines einfachen Karabinerhakens auch ein an einer Kette festlegbarer Karabinerhaken oder dergleichen vorgesehen sein.

Bei einer mehrteilig gestalteten Wickelwelle 5 oben genannter Art mit einem axial verschiebbaren Teil kann eine Blockiereinrichtung vorstehend geschilderter Art sowohl zur Blockierung in Drehrichtung als auch zur Blockierung in axialer Richtung dienen.

Um die im unbenutzten Zustand auf der Wickelwelle 5 aufgenommene Schneekette 4 gegen Verschmutzung etc. zu schützen, kann, wie Figur 3 weiter zeigt, ein auf den durch die aufgewickelte Schneekette 4 gebildeten Wicklungsballen aufziehbarer Sack 17 vorgesehen, . Der Sack 17 besteht zweckmäßig aus einem wasserundurchlässigen Material, beispielsweise Kunststoff. Der Sack 17 kann durch gürtelförmige Umreifungen etc. festgelegt sein. Im dargestellten Beispiel ist der Sack 17 mit einer geeigneten Lasche im Eingriff mit dem Verbindungselement 16 und auf diese Weise gegen Abrutschen gesichert.

Solange die Schneekette nicht benötigt wird, ergibt sich die der Figur 3 zugrundeliegende Situation. Dabei ist die Schneekette 4 auf die Wickelwelle 5 aufgewickelt und durch den Sack 17 geschützt. Die Wickelwelle 5 ist in Drehrichtung und gegebenenfalls in axialer Richtung blockiert. Wenn nun die Schneekette 4 auf die zugeordnete Radanordnung 2 aufgelegt werden soll, werden der Sack 17 abgenommen, die Blockierung der Wickelwelle gelöst und diese gegebenenfalls mit ihrem Aufnahmebereich in eine bezüglich der Radanordnung 2 mittige Position gebracht. Darauf wird das vordere Ende der Schneekette 4 am Profil der Bereifung der Radanordnung 2 angehängt. Hierzu kann, wie in Figur 2 angedeutet ist, ein an Stollen 19 des Bereifungsprofils einhängbares Verbindungselement 18, etwa in Form eines Seils etc., vorgesehen sein.

Anschließend wird das Fahrzeug so bewegt, dass die Schneekette 4 von der drehbaren Wickelwelle 5 abgewickelt wird und auf die zugeordnete Radanordnung 2 aufläuft, wie dies in Figur 1 angedeutet ist. Dabei wird die frei drehbar gelagerte Wickelwelle 5 durch den von der an der Radanordnung 2 angehängten Schneekette 4 ausgeübten Zug in Abwickelrichtung rotiert. Ein anderweitiger Antrieb mittels der Kurbel 10 oder dergleichen wird dabei nicht benötigt. Um eine Straffung der von der Wickelwelle 5 ablaufenden Schneekette 4 zu gewährleisten, ist der Wickelwelle 5 zweckmäßig eine Bremseinrichtung zugeordnet. Das von dieser ausgeübte Bremsmoment muss von der Schneekette 4 überwunden werden, wodurch diese gestrafft wird, was die Anbringung der Schneekette 4 an der zugeordneten Radanordnung 2 erleichtert.

Die Figur 4 zeigt ein besonders einfaches Beispiel einer Bremseinrichtung oben genannter Art. Diese besteht hier aus einer in eine zugeordnete radiale Gewindebohrung des Lagergehäuses 6 eingeschraubten Klemmschraube 20, die mit ihrem inneren Ende mit den Lagerzapfen 5b zusammenwirkt und an ihrem äußeren Ende einen Schlüsselkopf aufweist. Auf der Klemmschraube 20 ist eine zur Anlage am Außenumfang des Lagergehäuses 6 bringbare Kontermutter 21 aufgenommen, mittels der die Klemmschraube 20 fixierbar ist. Bei gelöster Kontermutter 21 ist die Klemmschraube zur Einstellung der gewünschten Bremskraft verdrehbar. Nach erfolgter Einstellung wird die Kontermutter 21 angezogen. Zur Verstärkung der Bremskraft und zur Schonung des Lagerzapfens 5b kann dem inneren Ende der Klemmschraube 20 ein am Lagerzapfen 5b anliegender Bremsklotz zugeordnet sein. Die Klemmschraube 20 kann bei entsprechend festem Anzug auch zum Blockieren der Wickelwelle 5 in Drehrichtung dienen. Selbstverständlich könnten bei Bedarf auch mehrere Klemmschrauben am Umfang des Lagerzapfens 5b vorgesehen sein.

Beim Auf- und Abwickeln der Schneekette 4 ist es von Vorteil, wenn sich die Wickelwelle im Bereich neben der zugeordneten Radanordnung 2 und im Bereich des Niveaus des oberen Scheitelpunkts der Randordnung 2 befindet. Nach vollständiger Abwickelung der Schneekette 4 von der Wickelwelle 5 ergibt sich die der Figur 2 zugrundeliegende Situation, in der die Schneekette 4 nur noch mit ihrem wellenseitigen Ende an den Mitnehmerelementen 9 der Wickelwelle 5 angreift. Die soweit abgewickelte Schneekette wird dementsprechend außer Eingriff mit den Mitnehmerelementen 9 gebracht. Anschließend können die einander zugewandten Enden der Schneekette in an sich bekannter Weise miteinander verbunden werden, womit die Schneekette 4 auf der zugeordneten Radanordnung 2 festgelegt ist.

Wenn die Schneekette 4 nicht mehr benötigt wird, wird diese auf die Wickelwelle 5 aufgewickelt. Zunächst wird der die beiden Enden der Schneekette 4 miteinander verbindende Verschluss geöffnet. Ein Ende der Schneekette 4 wird dann zum Eingriff mit den Mitnehmerelementen 9 der Wickelwelle 5 gebracht, wie in Figur 2 angedeutet ist. Anschließend wird das Fahrzeug so bewegt, dass die Schneekette 4 von der Randanordnung 2 freigegegeben wird. Im gleichen Maße wird die Schneekette 4 auf die Wickelwelle 5 aufgewickelt. Hierzu wird die Kurbel 10 in die der Figur 2 zugrundeliegende Eingriffsstellung gebracht. Nach vollständiger Aufnahme der Schneekette auf der Wickelwelle 5 können das Verbindungselement 16 und der Sack 17 in Stellung gebracht werden, womit die der Figur 3 zugrundeliegende Ruhestellung hergestellt wird.

Im dargestellten Beispiel ist jeweils nur einer Radanordnung pro Fahrzeugseite eine Schneekette zugeordnet. Dementsprechen ist hier daher pro Fahrzeugseite nur eine erfindungsgemäße Vorrichtung vorgesehen. Selbstverständlich ist aber in Fällen, in denen mehreren Radanordnungen pro Fahrzeugseite eine Schneekette zugeordnet ist, jeder derartigen Radanordnung auch eine erfindungsgemäße Vorrichtung zugeordnet.

## Patentansprüche

1. Vorrichtung zur Aufnahme einer einer Radanordnung (2) eines Fahrzeugs (1), insbesondere einer Zwillingsradanordnung eines Lastkraftwagens, zugeordneten Schneekette (4) mit einer im Bereich der zugeordneten Radanordnung (2) mit zu deren Achse paralleler Achse am Fahrzeugrahmen (7) anbringbaren, drehbar gelagerten Wickelwelle (5) auf welche die Schneekette (4) aufwickelbar und von welcher die Schneekette (4) abwickelbar ist.

2. Vorrichtung nach Anspruch 1, **dadurch gekennzeichnet, dass** die Wickelwelle (5) neben der zugeordneten Radanordnung (2) im Bereich des Niveaus des oberen Scheitelpunkts der zugeordneten Radanordnung (2) angeordnet ist.

3. Vorrichtung nach einem der vorhergehenden Ansprüche, **dadurch gekennzeichnet, dass** die Wickelwelle (5) einen zumindest über die Breite der zugeordneten Radanordnung (2) sich erstreckenden, der Schneekette (4) zugeordneten, zumindest außen durch eine vorzugsweise als Flanschanordnung ausgebildete Wicklungsbegrenzungseinrichtung (8) begrenzten Aufnahmebereich aufweist und dass die Wickelwelle (5) im der Schneekette (4) zugeordneten Aufnahmebereich mit vorzugsweise hakenförmig ausgebildeten Mitnehmerelementen (9) versehen ist, mit denen die Schneekette (4) mit einem ihrer Endbereiche zum Eingriff bringbar ist.

4. Vorrichtung nach einem der vorhergehenden Ansprüche, **dadurch gekennzeichnet, dass** die Wickelwelle (5) im der Schneekette zugeordneten Aufnahmebereich zumindest auf einem Teil ihres Umfangs eine von der Mitte zu den Enden abfallende Umfangskontur aufweist, die vorzugsweise durch wenigstens zwei einander gegenüberliegende, dachförmig nach außen abfallende Leisten (15) gebildet wird.

5. Vorrichtung nach einem der vorhergehenden Ansprüche, **dadurch gekennzeichnet, dass** die Wickelwelle (5) mittels einer zum Eingriff mit ihrem rahmenfernen Ende bringbaren, abnehmbaren Kurbel (10) antreibbar ist.

6. Vorrichtung nach einem der vorhergehenden Ansprüche, **dadurch gekennzeichnet, dass** der Wickelwelle (5) ein die auf dieser als Wicklung aufgenommene Schneekette (4) abdeckender, abnehmbarer Sack (17) zugeordnet ist.

7. Vorrichtung nach einem der vorhergehenden Ansprüche, **dadurch gekennzeichnet, dass** die Wickelwelle (5) als Rohrabschnitt ausgebildet ist, an den ein einen in ein vorzugsweise lösbar am Fahrzeugrahmen (7) anbringbares Lagergehäuse (6) eingreifenden Lagerzapfen (5b) enthaltendes Drehteil (5a) angesetzt ist.

8. Vorrichtung nach einem der vorhergehenden Ansprüche, **dadurch gekennzeichnet, dass** die Wickelwelle (5) zwei in axialer Richtung gegeneinander bewegbare Teile aufweist, wobei vorzugsweise der eine Teile den der Schneekette (4) zugeordneten Aufnahmebereich aufweist und der andere Teil in das Lagerhäuse (6) eingreift.

9. Vorrichtung nach einem der vorhergehenden Ansprüche, **dadurch gekennzeichnet, dass** die Schneekette (4) zum Abwickeln von der Wickelwelle (5) mittels wenigstens eines am in Abwickelrichtung vorderen Ende der Schneekette (4) angreifenden, vorzugsweise mit dem Profil (19) der zugeordneten Randanordnung (2) zum Eingriff bringbaren Verbindungselements (18) an der zugeordneten Radanordnung (2) anhängbar ist.

10. Vorrichtung nach einem der vorhergehenden Ansprüche, **dadurch gekennzeichnet, dass** der Wickelwelle (5) eine Bremseinrichtung zugeordnet ist, die vorzugsweise mindestens eine, mit dem Lagerzapfen (5b) zusammenwirkende, auf dem Lagergehäuse (6) aufgenommene Klemmschraube (20) enthält.
